# EUROPEAN PATENT APPLICATION

(11) **EP 2 395 219 A1**
(43) Date of publication of application: **14.12.2011**
(21) Application number: 10738660.9
(22) Date of filing: 09.02.2010
(51) Int. Cl.: F02D 29/00, F02D 45/00, F16H 61/02, F16H 61/18, F16H 59/08, F16H 59/14, F16H 59/24, F16H 59/36, F16H 59/46, F16H 59/72, F16H 59/74, F16H 59/78

(54) **SERVICE VEHICLE MOTOR CONTROL DEVICE**

(30) Priority: 09.02.2009 JP 2009027276
(71) Applicant: Hitachi Construction Machinery Co., Ltd., Tokyo 112-0004 (JP)
(72) Inventor: HYODO, Koji, Tsuchiura-shi Ibaraki 300-0013 (JP); NAKAZONO, Hiroki, Tokyo 105-0003 (JP); SHIMAZU, Atsushi, Tsuchiura-shi Ibaraki 300-0013 (JP); AOKI, Isamu, Tokyo 105-0003 (JP); AZUMA, Hiroyuki, Tsuchiura-shi Ibaraki 300-0013 (JP)
(74) Representative: Jansen, Cornelis Marinus
(86) International application number: PCT/JP2010/051888
(87) International publication number: WO 2010/090332

(57) **Abstract**

An engine control device for work vehicle includes: a rotation speed control device that controls a rotation speed of an engine according to an operation amount of an accelerator pedal; a travel drive device that transmits a rotation of the engine to wheels through a torque converter and a transmission; a water temperature detection device that detects a physical quantity correlated with a cooling water temperature of the engine; a speed ratio detection device that detects a speed ratio of an input shaft and an output shaft of the torque converter; and a speed limit device that limits a maximum rotation speed of the engine to a limit rotation speed which is lower than an upper limit value if the water temperature detection device detects an overheat state in which the cooling water temperature is equal to or higher than a predetermined value when the speed ratio detected by the speed ratio detection device is in a limit speed ratio region where a torque converter efficiency is equal to or less than a predetermined value.

## Description

### TECHNICAL FIELD

The present invention relates to an engine control device for work vehicle such as a wheel loader.

### BACKGROUND ART

There are devices known in the related art which are configured to, when engine coolant temperature rises and an engine enters an overheat state, reduce the engine speed so as to reduce the engine output, thereby restoring the engine from the overheat state to a normal state (refer to Patent Literature 1 for example).

### CITATION LIST

### PATENT LITERATURE

[PATENT LITERATURE 1] Japanese Patent No. 2724820

### SUMMARY OF INVENTION

### TECHNICAL PROBLEM

However, in a work vehicle such as a wheel loader, in which engine rotation is transmitted to wheels via a torque converter, simple reduction of the engine speed in an overheat state does not achieve a desired travel driving force, thereby compromising workability.

### SOLUTION TO PROBLEM

An engine control device for work vehicle according to a first aspect of the present invention, comprises: a rotation speed control device that controls a rotation speed of an engine according to an operation amount of an accelerator pedal; a travel drive device that transmits a rotation of the engine to wheels through a torque converter and a transmission; a water temperature detection device that detects a physical quantity correlated with a cooling water temperature of the engine; a speed ratio detection device that detects a speed ratio of an input shaft and an output shaft of the torque converter; and a speed limit device that limits a maximum rotation speed of the engine to a limit rotation speed which is lower than an upper limit value if the water temperature detection device detects an overheat state in which the cooling water temperature is equal to or higher than a predetermined value when the speed ratio detected by the speed ratio detection device is in a limit speed ratio region where a torque converter efficiency is equal to or less than a predetermined value.
An engine control device for work vehicle according to a second aspect of the present invention, comprises: a rotation speed control device that controls a rotation speed of an engine according to an operation amount of an accelerator pedal; a travel drive device that transmits a rotation of the engine to wheels through a torque converter and a transmission; an oil temperature detection device that detects a physical quantity correlated with a hydraulic oil temperature of the torque converter; a speed ratio detection device that detects a speed ratio of an input shaft and an output shaft of the torque converter; and a speed limit device that limits a maximum rotation speed of the engine to a limit rotation speed which is lower than an upper limit value if the oil temperature detection device detects an overheat state in which the hydraulic oil temperature is equal to or higher than a predetermined value when the speed ratio detected by the speed ratio detection device is in a limit speed ratio region where a torque converter efficiency is equal to or less than a predetermined value.
According to a third aspect of the present invention, in the engine control device for work vehicle according to the first or second aspect, it is preferable that the torque converter has characteristics in that the torque converter efficiency increases with an increase in the speed ratio in a first region where the speed ratio is low and the torque converter efficiency decreases with an increase in the speed ratio in a second region where the speed ratio is high; and the limit speed ratio region includes a region where the speed ratio is equal to or less than a first predetermined value in the first region and a region where the speed ratio is equal to or greater than a second predetermined value in the second region.
According to a fourth aspect of the present invention, the engine control device for work vehicle according to the third aspect may further comprise: an automatic speed changer that shifts down a speed stage of the transmission when the detected speed ratio decreases to a shift-down speed ratio which is greater than the first predetermined value and shifts up the speed stage of the transmission when the detected speed ratio increases to a shift-up speed ratio which is less than the second predetermined value.

### ADVANTAGEOUS EFFECT OF THE INVENTION

According to the present invention, upon detecting an overheat state in a speed ratio region with low torque converter efficiency, the maximum rotation speed of an engine is limited, thereby preventing overheat while inhibiting reduction in travel driving force.

### BRIEF DESCRIPTION OF THE DRAWINGS

[FIG. 1] FIG. 1 is a side view of a wheel loader according to an embodiment of the present invention.
[FIG. 2] FIG. 2 is a diagram showing a general structure of an engine control device according to an embodiment of the present invention.
[FIG. 3] FIGS. 3 (a) and (b) are diagrams showing timing of automatic transmission.
[FIG. 4] FIG. 4 is a diagram showing characteristics of torque converter efficiency.
[FIG. 5] FIG. 5 is a diagram showing torque characteristics as a comparative example of the present embodiment.
[FIG. 6] FIG. 6 is a diagram showing torque characteristics of the engine control device of the present embodiment.
[FIG. 7] FIG. 7 is a diagram showing a relationship between a pedal operation amount and a target engine speed.
[FIG. 8] FIG. 8 is a flowchart showing an example of processing to be executed by a controller of FIG. 2.
[FIG. 9] FIG. 9 is a diagram showing travel driving force characteristics when the speed limit is off.
[FIG. 10] FIG. 10 is a diagram showing travel driving force characteristics when the speed limit is on.
[FIG. 11] FIG. 11 is a diagram showing travel driving force characteristics as a comparative example of the present embodiment.
[FIG. 12] FIG. 12 illustrates an example of a loading work in a V cycle.
[FIG. 13] FIG. 13 illustrates an example of a loading work into a dump truck.
[FIG. 14] FIG. 14 is a diagram showing an example of a control pattern of the maximum engine speed.

### DESCRIPTION OF EMBODIMENTS

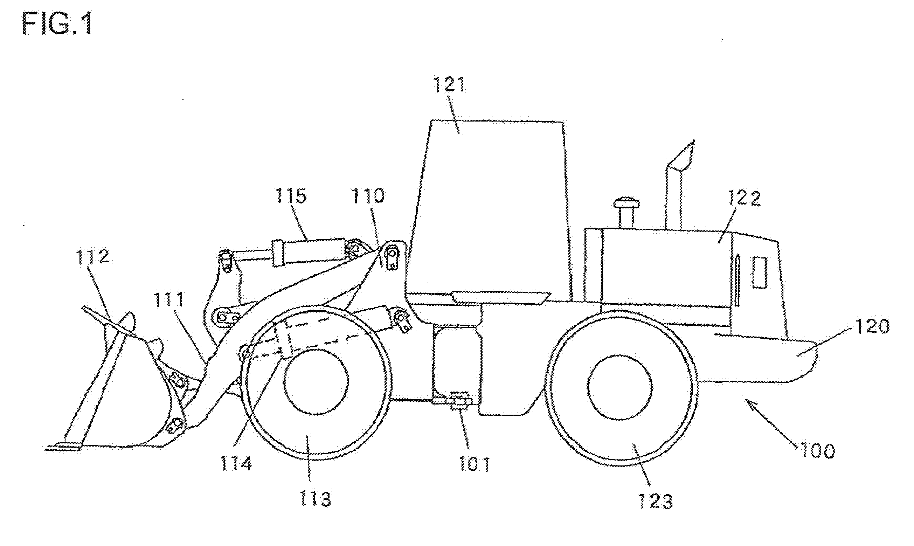

An engine control device for work vehicle according to an embodiment of the present invention will now be explained with reference to FIG. 1 to FIG. 14.
FIG. 1 is a side view of a wheel loader which is an example of a work vehicle to which the engine control device according to the present embodiment is applied. A wheel loader 100 is constituted with a front body 110 which includes an arm 111, a bucket 112, tires 113, and the like and a rear body 120 which includes a driver's cabin 121, an engine compartment 122, tires 123, and the like. The arm 111 vertically rotates (articulates up and down) upon drive of an arm cylinder 114, and the bucket 112 vertically rotates (dumps or crowds) upon drive of a bucket cylinder 115. The front body 110 and the rear body 120 are rotatably connected with each other by a center pin 101, so that the front body 110 swings side to side with respect to the rear body 120 by expansion and contraction of a steering cylinder (not shown in the figures).

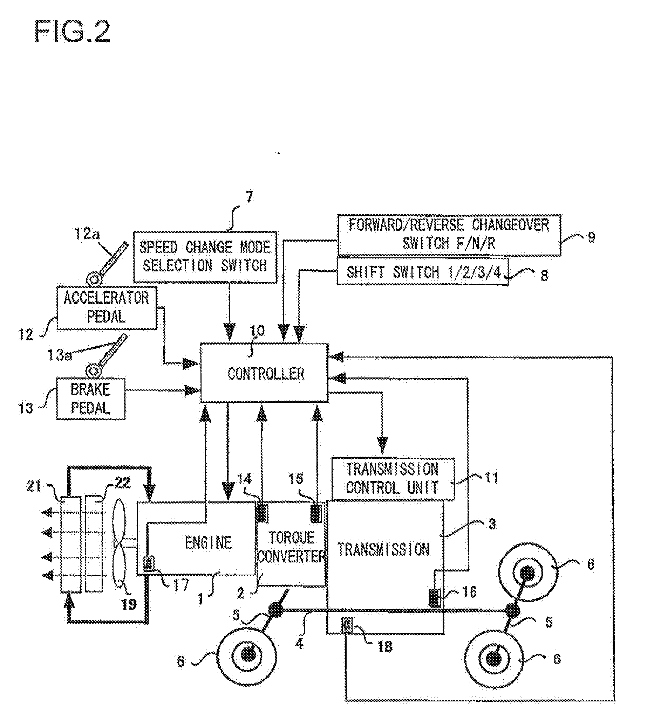

FIG. 2 is a diagram showing the general structure of the engine control device according to the embodiment. An input shaft of a torque converter 2 (hereinafter referred to as TC) is connected to an output shaft of an engine 1, and an output shaft of the TC 2 is connected to a four-speed shiftable transmission 3. The TC 2 is a well-known fluid clutch constituted with an impeller, a turbine, and a stator, and rotation of the engine 1 is transmitted to the transmission 3 through the TC 2. The transmission 3 includes a hydraulic clutch for shifting speed gears, so that rotation speed of the output shaft of the TC 2 is changed by the transmission 3. The rotation at a shifted speed is transmitted to tires 6 (indicated as 113 and 123 in FIG. 1) through a propeller shaft 4 and an axle 5, so that the vehicle travels.

The engine 1 is attached with a cooling fan 19, which is driven by rotation of the engine 1, and the cooling fan 19 is driven to cause cooling air to blow through a radiator 21 and an oil cooler 22. In the radiator 21 and the oil cooler 22, cooling air is heat exchanged with engine coolant and hydraulic oil, respectively, thereby cooling the engine coolant and the hydraulic oil for the TC and for work. It is to be noted that the wheel loader is provided with a work hydraulic pump (not shown in the figures) which is driven by the engine 1 to supply pressure oil from the hydraulic pump to actuators such as the arm cylinder 114 and the bucket cylinder 115, thereby carrying out the work.

A controller 10 is configured to include an arithmetic processing unit which has a CPU, a ROM, a RAM, and other peripheral circuits. The controller 10 is connected with an accelerator operation amount detector 12, which detects an operation amount of an accelerator pedal 12a, a brake operation amount detector 13, which detects an operation amount of a brake pedal 13a, a rotation speed detector 14, which detects a rotation speed Ni of the input shaft of the TC 2 , a rotation speed detector 15, which detects a rotation speed Nt of the output shaft of the TC 2 , a vehicle speed detector 16, which detects the rotation speed of an output shaft of the transmission 3, i.e., a vehicle speed v, a water temperature detector 17, which detects a temperature Tw of engine coolant circulating between the engine 1 and the radiator 21, an oil temperature detector 18, which detects temperature (a TC oil temperature Tt) of transmission oil for power transmission of the TC 2, TC cooling and transmission lubricant, a speed change mode selection switch 7, which selects a manual speed change mode or an automatic speed change mode, a shift switch 8, which instructs an upper limit of the speed stage between the first speed to the fourth speed, and a forward/reverse changeover switch 9, which instructs forward movement or reverse movement of the vehicle.

The TC 2 has a function to increase output torque with respect to input torque, i.e., a function to make the torque ratio 1 or higher. The torque ratio decreases with an increase in a TC speed ratio e (an output rotation speed Nt / an input rotation speed Ni), which is the ratio of the rotation speeds of the input shaft and the output shaft of the TC 2. For example, when traveling load increases while traveling with the engine speed in a constant state, the output rotation speed Nt of the TC 2, i.e., the vehicle speed, decreases and the TC speed ratio e decreases. At this time, since the torque ratio increases, the vehicle can travel with a greater driving force (traction force). To sum up, driving force increases as the vehicle speed is lower (low speed, high torque) whilst driving force decreases as the vehicle speed is higher (high speed, low torque).

The transmission 3 is an automatic speed changer which includes solenoid valves corresponding to each speed stage of the first speed (first gear) to the fourth speed (fourth gear). These solenoid valves are driven by a control signal output from the controller 10 to a transmission control unit 11, thereby shifting the speed.

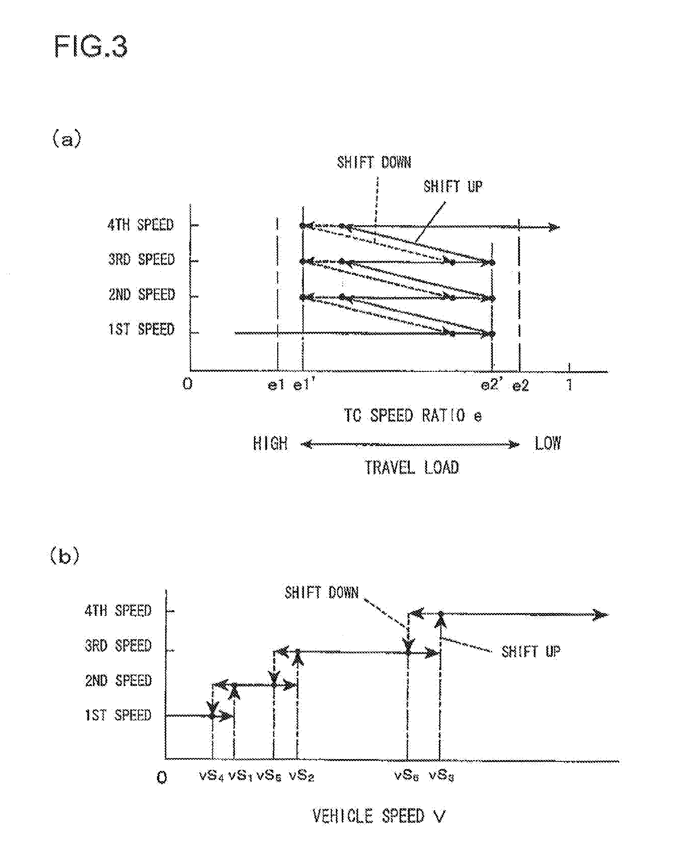

FIGS. 3 (a) and (b) are diagrams showing timing of automatic transmission by the transmission 3. There are two types of methods of automatic transmission control. One is TC speed ratio reference control, in which the speed gear is shifted when the TC speed ratio e reaches a predetermined value as shown in FIG. 3 (a), and the other is vehicle speed reference control, in which the speed gear is shifted when the vehicle speed v reaches a predetermined value as shown in FIG. 3 (b). In the present embodiment, the speed gear of the transmission 3 is controlled by the TC speed ratio reference control.

In the TC speed ratio reference control shown in FIG. 3 (a), when the traveling load decreases and the TC speed ratio e increases, so that the TC speed ratio e becomes equal to or higher than a predetermined value e2', the speed stage is shifted up by one stage. On the contrary, when the traveling load increases and the TC speed ratio e decreases, so that the TC speed ratio e becomes equal to or lower than a predetermined value e1', the speed stage is shifted down by one stage. This automatically changes the speed stage of the transmission 3 between the first speed and the fourth speed according to the TC speed ratio e. At this time, the speed stage is changed automatically within a speed stage selected by the shift switch 8 as an upper limit. For instance, the speed stage is set to the first speed or the second speed when the second speed is selected by the shift switch 8, and the speed stage is fixed to the first speed when the first speed is selected.

It is to be noted that the speed stage of the transmission 3 may be controlled by the vehicle speed reference control instead of the TC speed ratio reference control. In this case, as shown in FIG. 3 (b), the speed stage is shifted up by one stage when the vehicle speed v increases and reaches a predetermined value vS1, vS2, or vS3, and the speed stage is shifted down by one stage when the vehicle speed v decreases and reaches a predetermined value vS4, vS5, or vS6.

The controller 10 stores in advance the TC speed ratios e1' and e2', which serve as a reference of speed change, and TC speed ratios e1 (< e1') and e2 (> e2'), which serve as a reference of engine speed limitation to be described later.

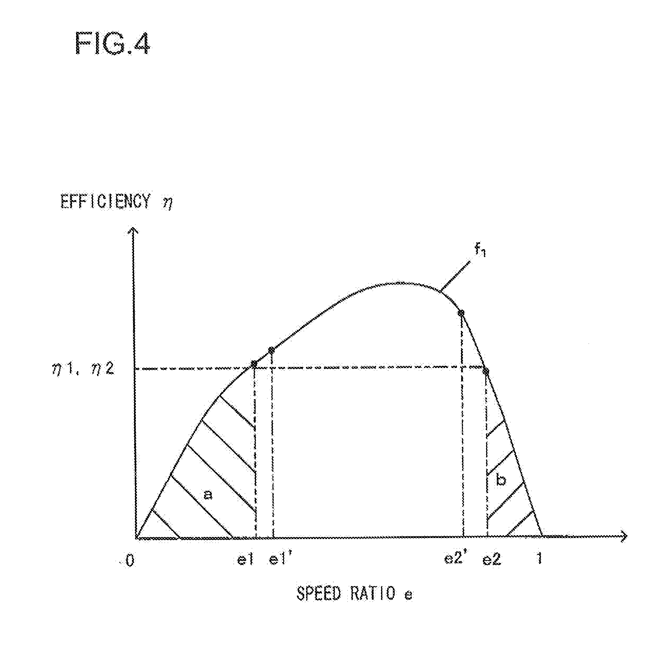

FIG. 4 is a diagram showing a characteristic f1 of a TC efficiency η with respect to the TC speed ratio e. As shown in FIG. 4, the characteristic f1 has substantially a parabola shape being convex upward, and the efficiency η is low in a region "a" where the TC speed ratio e is low (region in which the TC speed ratio e is close to 0) and a region "b" where the TC speed ratio e is high (region in which the TC speed ratio e is close to 1). In the present embodiment, in a range where the speed ratio e is low in which the efficiency η increases with an increase in the speed ratio e, i.e., the range where the characteristic f1 curve slants to the up-right, the speed ratio at which the efficiency η becomes equal to a predetermined value η1 or less is set to the predetermined value e1. In a range where the speed ratio e is high in which the efficiency η decreases with an increase in the speed ratio e, i.e., the range where the characteristic f1 curve slants to the down-right, the speed ratio at which the efficiency η becomes equal to a predetermined value η2 or less is set to e2. It is to be noted that the values of η and η2 may be either the same as or different from one another.

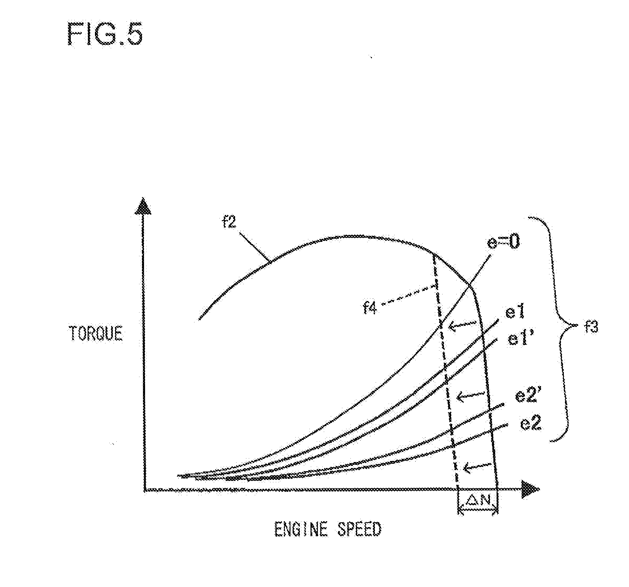

FIG. 5 is a traveling performance diagram (torque diagram) showing the relationship between the engine speed and torque when the accelerator pedal 12a is fully depressed. In the figure, a characteristic f2 is a characteristic indicating engine output torque, and characteristics f3 are characteristics indicating input torque of the TC 2 when the TC speed ratio e is 0, e1, e1', e2', and e2. It is to be noted that a characteristic f4 (dotted line) in the figure is a characteristic of engine output torque when the maximum engine speed is uniformly limited or reduced by a predetermined amount ΔN.

TC input torque increases in proportion to the square of the rotation speed Ni of the TC input shaft, and the TC input torque is lower as the TC speed ratio e is higher. The points of intersection between the characteristic f2 and the characteristics f3 are matching points, and the engine output torque and TC input torque while the vehicle is traveling correspond to the values of these matching points. In FIG. 5, when the engine speed is limited or reduced by the predetermined amount ΔN, the matching points shift to the left in the figure and the TC input torque decreases from the value achieved when the engine speed is not limited. Here, (the TC input torque) x (the rotation speed of the TC input shaft) is input power of the TC 2, which is equivalent to the engine output. As a result, for instance, when the engine coolant temperature Tw is high, the maximum engine speed is limited so as to reduce the engine output, thereby curbing the rise of the engine coolant temperature Tw.

However, when the maximum engine speed is uniformly reduced, the TC input torque decreases overall, thereby also reducing power (horsepower) available for traveling. This results in inefficient travel driving force when performing work, which is a practical problem. Meanwhile, the TC oil temperature Tt and the engine coolant temperature Tw each have a correlation with the TC efficiency η. More specifically, since power loss in the TC 2 becomes greater as the TC efficiency η becomes lower, heat balance becomes unbalanced and thus the TC oil temperature Tt and the engine coolant temperature Tw rise. With this in mind, in the present embodiment, when the TC oil temperature Tt rises and the engine coolant temperature Tw rises, the engine speed is limited or reduced according to the TC speed ratio e.

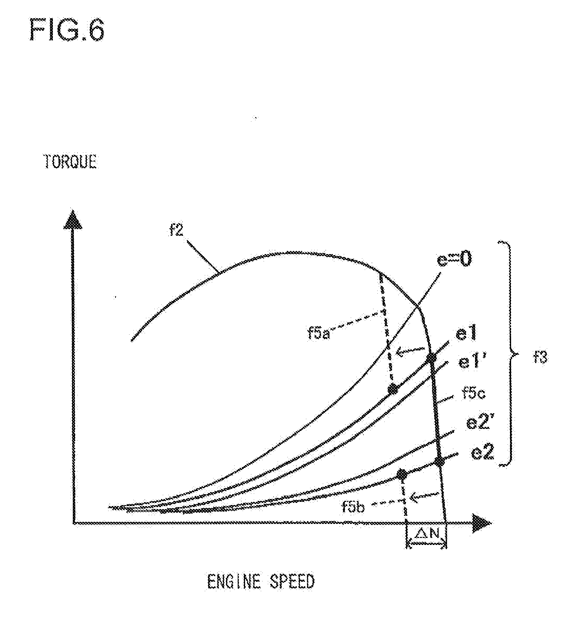

More specifically, the engine speed is limited by the processing in the controller 10 described below in regions where the TC efficiency η is low, i.e., the regions where the TC speed ratio e is equal to or less than the predetermined value e1 (e ≤ e1) and equal to or greater than the predetermined value e2 (e ≥ e2) as shown by a characteristic f5a (dotted line) and a characteristic f5b (dotted line) in FIG. 6. On the other hand, as shown by a characteristic f5c (solid line) in the figure, the engine speed is not limited in a practical region where the TC efficiency η is high, i.e., the TC speed ratio e is e1 < e < e2.

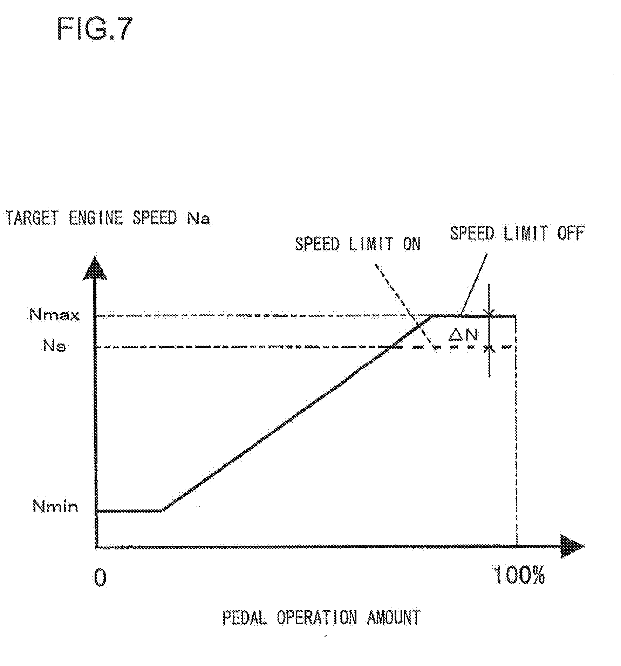

The controller 10 controls the engine speed to a target engine speed Na according to an operation amount of the accelerator pedal 12a. FIG. 7 is a diagram showing the relationship between a pedal operation amount and the target engine speed Na. It is to be noted that, in the figure, the solid line represents a characteristic of no limitation of the engine speed, i.e., speed limit OFF and the dotted line represents a characteristic of limitation of the engine speed, i.e., speed limit ON. The target engine speed Na can be varied between an upper limit Nmax and a lower limit Nmin of the engine speed.

As shown in FIG. 7, the target engine speed Na is at the lower limit Nmin when the accelerator pedal 12a is not operated and the target engine speed Na increases with an increase in the pedal operation amount. In the speed limit OFF state, the target engine speed Na is at the upper limit Nmax when the pedal is fully depressed. In the speed limit ON state, on the other hand, the maximum value of the target engine speed Na is limited, so that the target engine speed Na is at a predetermined value Ns (< Nmax) when the pedal is fully depressed. The controller 10 outputs a control signal corresponding to the target engine speed Na to the engine 1 and controls the engine speed to the target engine speed Na. It is to be noted that the speed limit amount ΔN, which is the difference between the upper limit Nmax of the target engine speed Na and the predetermined value Ns, is set to, for example, about 10% of the Nmax.

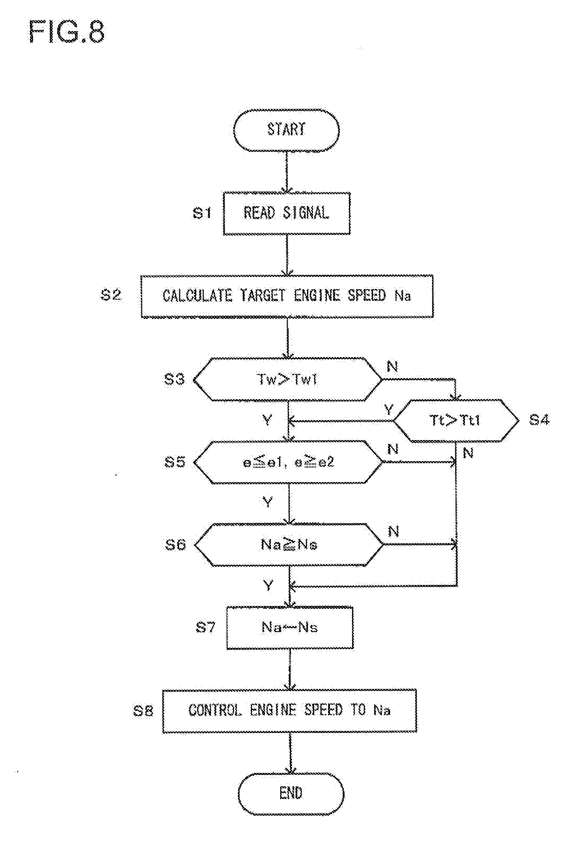

FIG. 8 is a flowchart showing an example of processing to be executed at the CPU of the controller 10, in particular an example of processing relating to the engine speed control. The processing shown in this flowchart starts, for example, as an engine key switch is turned on. In a step S1, signals from the variety of sensors 12 to 18 and the switches 7 to 9 of FIG. 2 are read. In a step S2, based upon the pre-stored characteristic (solid line) of non-limited engine speed of FIG. 7, the controller 10 calculates the target engine speed Na with respect to the pedal operation amount detected by the accelerator operation amount detector 12.

In a step S3, the controller 10 makes a decision as to whether or not the engine coolant temperature Tw, detected by the water temperature detector 17, is higher than a predetermined value Tw1. This is a process to make a decision as to whether or not there is an overheat state due to rise in water temperature. Here, the overheat state includes not only a perfect overheat state, in which the engine coolant temperature Tw is higher than a permissible limit value, but also a near overheat state (impending overheat state), in which the engine coolant temperature Tw is closer to the permissible limit value more than a certain extent. In the present embodiment, the predetermined value Tw1 is set to a slightly lower value (90°C for instance) than the permissible limit value of the engine coolant temperature. Upon making a positive decision on the step S3, the flow of control proceeds to a step S5, and, upon making a negative decision on the step S3, the flow of control proceeds to a step S4.

In the step S4, the controller 10 makes a decision as to whether or not the TC oil temperature Tt, detected by an oil temperature detector 20, is higher than a predetermined value Tt1. This is a process to make a decision as to whether or not there is an overheat state due to rise in oil temperature. Here, the overheat state includes not only a perfect overheat state, in which the TC oil temperature Tt is higher than a permissible limit value, but also a near overheat state (impending overheat state), in which the TC oil temperature Tt is closer to the permissible limit value more than a certain extent. In the present embodiment, the predetermined value Tt1 is set to a value (105°C for example) slightly lower than the permissible limit value of the TC oil temperature. Upon making a positive decision on the step S4, the flow of control proceeds to the step S5, and, upon making a negative decision on the step S4, the flow of control proceeds to a step S8.

In the step S5, the controller 10 calculates the TC speed ratio e in response to a signal from the rotation speed detectors 14 and 15 and makes a decision as to whether or not the TC speed ratio e is equal to or less than the predetermined value e1 or equal to or greater than the predetermined value e2. Upon making a positive decision on the step S5, the flow of control proceeds to a step S6, and, upon making a negative decision on the step S5, the flow of control proceeds to the step S8.

In the step S6, the controller 10 makes a decision as to whether or not the target engine speed Na, calculated in the step S2, is equal to or grater than the predetermined value Ns of FIG. 7. Upon making a positive decision on the step S6, the flow of control proceeds to a step S7, and, upon making a negative decision on the step S6, the flow of control proceeds to the step S8. In the step S7, the predetermined value Ns is set to be a target engine speed Na. In the step S8, the controller 10 outputs a control signal to the engine 1 and controls the engine speed to the target engine speed Na.

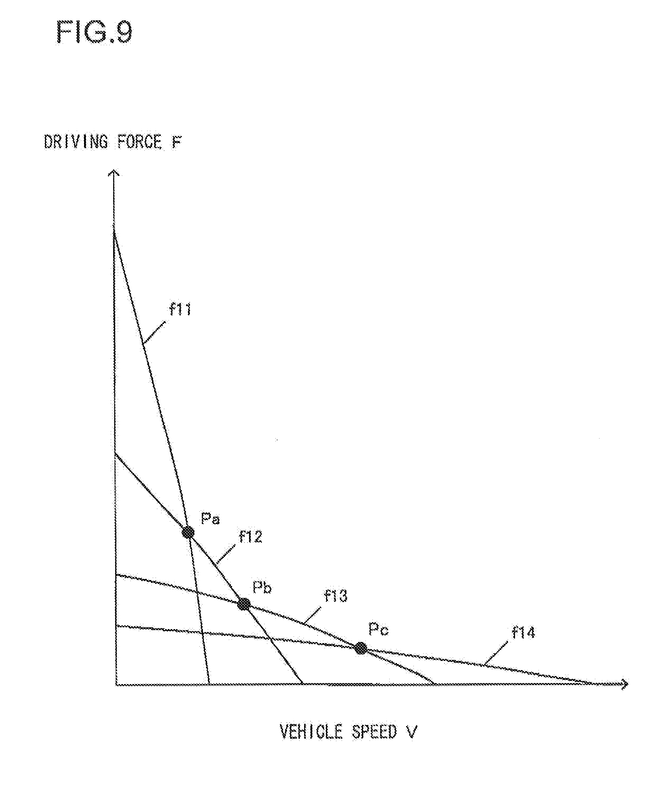

The operations of the present embodiment will be summarized as follows. When the engine coolant temperature Tw is equal to or less than the predetermined value Tw1 and the TC oil temperature Tt is equal to or less than the predetermined value Tt1, the maximum rotation speed of the engine 1 is not limited and the engine speed when the pedal is fully depressed is controlled to the upper limit Nmax (step S2, step S3, step S4, and then step S8). At this time, the relationship between the vehicle speed v and a travel driving force F is as shown in FIG. 9. In the figure, characteristics f11 to f14 represent characteristics of the first speed stage to the fourth speed stage, respectively, and the driving force F decreases with an increase in the vehicle speed v for each of the speed stages. Intersections of the characteristics f11 and f12, f12 and f13, and f13 and f14 make speed change points pa, pb, and pc, respectively, at which the speed ratio e is e1' or e2'.

On the other hand, when at least the engine coolant temperature Tw is higher than the predetermined value Tw1 or the TC oil temperature Tt is higher than the predetermined value Tt1, the engine speed is limited in the range where the speed ratio e is e ≤ e1 and e > e2 and the engine speed when the pedal is fully depressed is regulated to the predetermined value Ns (step S7 to step S8). This reduces the engine output and the input power of the TC 2, thereby curbing the rise of the engine coolant temperature Tw and the TC oil temperature Tt.

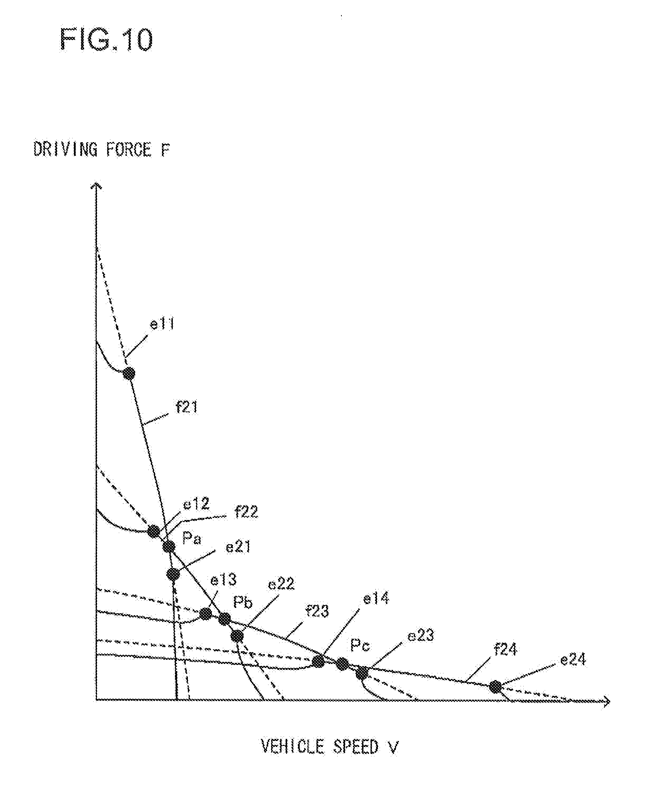

At this time, the relationship between the vehicle speed v and the travel driving force F is as shown in FIG. 10. In the figure, characteristics f21 to f24 represent characteristics of the first speed stage to the fourth speed stage, respectively, and, on the characteristics f21 to f24, the speed ratio is e1 at each of points e11, e12, e13, and e14 and the speed ratio is e2 at each of points e21, e22, e23, and e24. It is to be noted that the dotted lines correspond to the characteristics f11 to f14 of FIG. 9.

At this time, in the range where the speed ratio e is e ≤ e1 and e ≥ e2, the travel driving force F decreases as shown in the figure. However, in the range where the speed ratio e is e1 < e < e2, the engine speed is not limited (speed limit OFF) and thus the travel driving force F does not decrease. Accordingly, when the third speed or the fourth speed is selected with the shift switch 8 as the maximum speed stage for instance, the speed stage is shifted up or shifted down before the speed ratio decreases equal to or less than e1 and increases equal to or greater than e2, respectively, thereby inhibiting reduction in driving force during traveling. As a result, reduction in travel acceleration performance and speed reduction during uphill traveling can be inhibited, thereby improving travel performance.

It is to be noted that in the range where the speed ratio e is e1 < e < e2, the engine speed is not limited even if the engine coolant temperature Tw and the TC oil temperature Tt exceed the predetermined values Tw1 and Tt1, respectively. Since in the above range the TC 2 has a small power loss, the engine coolant temperature Tw and the TC oil temperature Tt do not exceed the permissible limit values, and thus there is no problem in not limiting the engine speed. If the engine coolant temperature Tw and the TC oil temperature Tt should exceed the permissible limit values, there would be a problem in settings of the engine 1 or the TC 2.

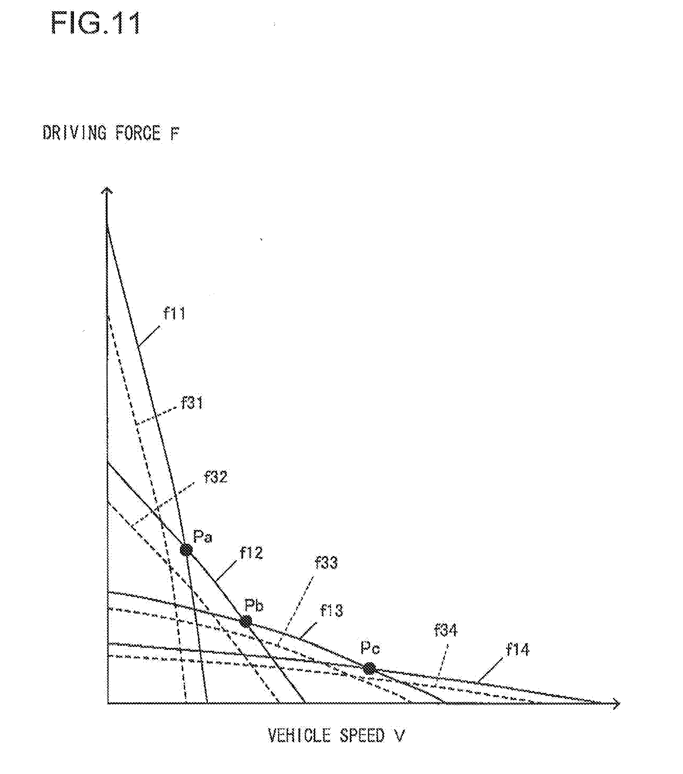

FIG. 11 is a diagram showing the travel driving force characteristics as a comparative example of the present embodiment. In the figure, the characteristics f11 to f14 represent characteristics when the engine speed is not limited and characteristics f31 to f34 (dotted lines) represent characteristics when the engine speed is uniformly limited or reduced regardless of the speed ratio e. When the engine speed is uniformly reduced as shown in FIG. 11, the travel driving force F decreases over the whole area of the vehicle speed v. This raises issues of reduction in acceleration performance and speed reduction during uphill traveling, thereby reducing workability.

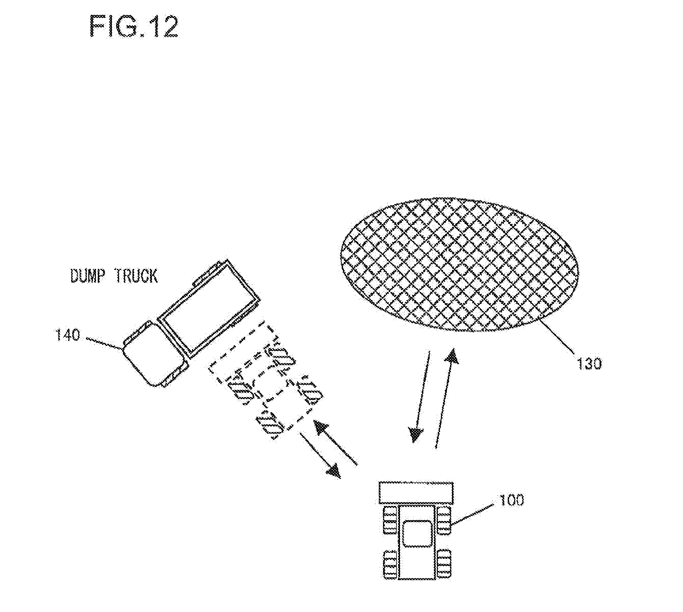

In the present embodiment, on the other hand, overheat can be prevented while inhibiting reduction in travel driving force. The great travel driving force F is required for a loading work in a so-called V cycle, in which, as shown in FIG. 12 for instance, the vehicle 100 digs into a mound 130 or the like, takes some sediment into the bucket, moves backwards, turns around, moves towards a dump truck 140, and loads the sediment in the bucket to the dump truck 140. Thus, the first speed or the second speed is selected as the maximum speed gear with the shift switch 8. In this case, also in the present embodiment, the maximum driving force F is reduced in the range of the speed ratio e < e1 but the range of the reduction of the driving force F is narrow and thus there are no practical problems.

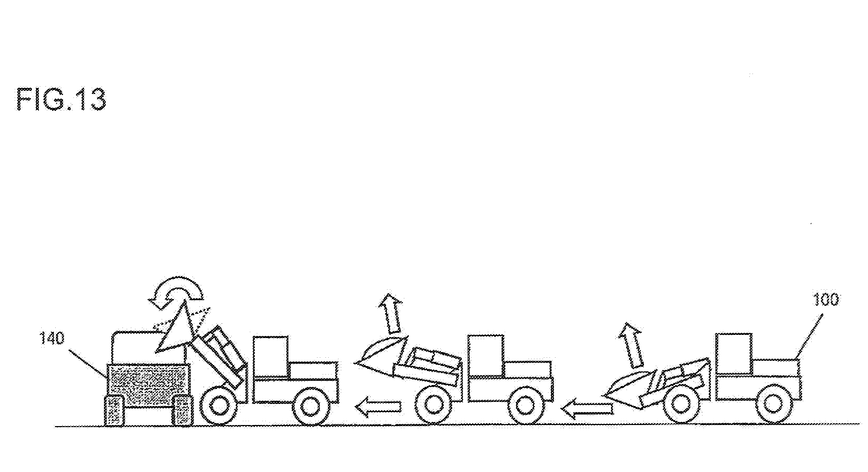

In addition, during a normal loading work to the dump truck 140, as shown in FIG. 13, an operator operates the cylinders 114 and 115 so as to lift the bucket 112 up while fully depressing the accelerator pedal 12a in the second gear as well as moving the vehicle 100 towards the dump truck 140. In this case, travel load is high immediately after the start of travel, the TC speed ratio becomes equal to or less than e1, and thus the maximum engine speed is limited. However, since the speed ratio becomes greater than e1 soon after the start of travel and the limitation on the maximum engine speed is released, the vehicle speed v and the driving speed of the bucket 122 can be increased.

After that, when the bucket 112 is lifted up to an appropriate position for loading the sediment or the like to the dump truck and the vehicle 100 approaches the dump truck 140, the operator backs off the accelerator pedal 12a so as to slow down the vehicle. At this time, if the speed ratio is equal to or greater than e2, the maximum engine speed is limited, and thus the operator can slow down the vehicle without backing off the accelerator pedal 12a, thereby making loading work into the dump truck 140 easy.

The following operations and advantageous effects can be achieved according to the present embodiment.
(1) It is arranged that, even if the engine coolant temperature Tw and the TC oil temperature Tt become higher than the predetermined values Tw1 and Tt1, respectively, the maximum engine speed is not limited (speed limit OFF) in the range where the TC speed ratio e is e1 < e < e2, and the maximum engine speed is reduced by the predetermined amount ΔN (speed limit ON) in the range where the TC speed ratio e is equal to or less than e1 and equal to or greater than e2. In other words, the maximum engine speed is not limited in a practical region where the TC efficiency η is high, and the maximum engine speed is limited in a region where the TC efficiency η is low so as to reduce the engine output and the input power of the TC 2. This prevents workability from being reduced due to lack of the travel driving force F and curbs the rise of the TC oil temperature Tt and the engine coolant temperature Tw 1 due to power loss of the TC 2, thereby preventing overheat.
(2) It is arranged that the predetermined value e1 is set to be less than the speed ratio e1', which serves as a reference for shifting down, and the predetermined value e2 is set to be greater than the speed ratio e2', which serves as a reference for shifting up. This allows the engine speed not to be limited upon automatic speed change and minimizes reduction in the travel driving force F.

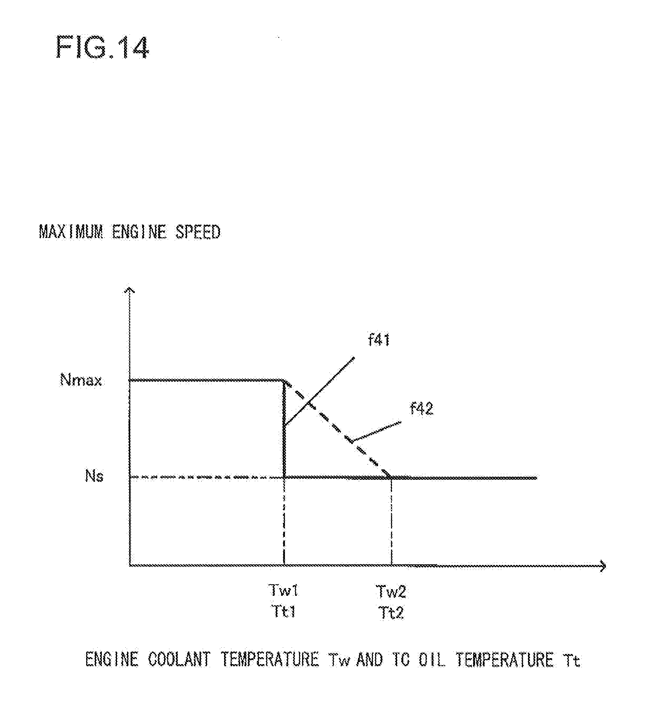

It is to be noted that while in the above embodiment it is arranged that when the engine coolant temperature Tw exceeds the predetermined value Tw1 or when the TC oil temperature Tt exceeds the predetermined value Tt1, the maximum engine speed is reduced from Nmax to Ns as shown by a characteristic f41 (solid line) of FIG. 14, it may be arranged that the maximum engine speed is gradually reduced with increases in the engine coolant temperature Tw and the TC oil temperature Tt as shown by a characteristic f42 (dotted line). More specifically, it may be arranged that the maximum engine speed limit amount ΔN gradually increases where the engine coolant temperature Tw is between the predetermined value Tw1 and a predetermined value Tw2 (100°C for example) and where the TC oil temperature Tt is between the predetermined value Tt1 and a predetermined value Tt2 (115°C for instance). This prevents travel performance from rapidly changing and prevents shocks from occurring. It is to be noted that the permissible limit value of the engine coolant temperature Tw and the permissible limit value of the TC oil temperature Tt may be set to the predetermined values Tw2 and Tt2, respectively. In addition, it may be arranged that the maximum engine speed gradually increases from Ns to Nmax if the TC speed ratio e enters within the range of e1 < e < e2 (not shown in the figures).

In the above embodiment, it is arranged that the maximum engine speed is limited when an overheat state in which the engine coolant temperature Tw is equal to or greater than the predetermined value Tw1 or the TC oil temperature Tt is equal to or greater than the predetermined value Tt1 is detected in a limit speed ratio region where the TC speed ratio is equal to or less than e1 (the first predetermined value) and equal to or greater than e2 (the second predetermined value). However, it may be arranged that the maximum engine speed is limited only when the speed ratio is equal to or less than e1 or only when the speed ratio is equal to or greater than e2. It may be arranged that, for example, the following three patterns are set as ranges for limiting the maximum engine speed: the TC speed ratio e is both equal to or less than e1 and equal to or greater than e2; only equal to or less than e1; and only equal to or greater than e2, and one of the patterns can be selected with a selection switch.

The characteristics of the TC efficiency η are not limited those shown in FIG. 4 and any processing may be adopted in the controller 10 as a speed limit means as long as the maximum engine speed is limited to the limit rotation speed Ns, which is lower than the upper limit Nmax, when the TC efficiency η is equal to or less than a predetermined value. The structure of the travel drive device which transmits rotation of the engine 1 to the wheels 6 through the TC 2 and the transmission 3 is not limited to that shown in FIG. 2. Any structures may be adopted in the controller 10 as a rotation speed control means and the engine 1 as long as the engine speed is controlled according to the operation amount of the accelerator pedal 12a. While the rotation speed detectors 14 and 15 detect the TC speed ratio e, any structure may be adopted in the speed ratio detection means. Any structure may be adopted in the water temperature detector 17 as a water temperature detection means as long as a physical quantity correlated with the engine coolant temperature Tw is detected. Any structure may be adopted in the oil temperature detector 18 as an oil temperature detection means as long as a physical quantity correlated with the TC oil temperature Tt is detected.

While the above explanation is made on an example in which the present invention is adopted in a wheel loader, the present invention may be adopted in the same manner in another working vehicle that is driven by a TC. Namely, the present invention is not limited to the engine control device for work vehicle achieved in the embodiments as long as the features and functions of the present invention are realized effectively.
The disclosures of the following priority applications are herein incorporated by reference: Japanese Patent Application No. 2009-027276 (filed on February 9, 2009).

## Claims

1. An engine control device for work vehicle, comprising:
a rotation speed control device that controls a rotation speed of an engine according to an operation amount of an accelerator pedal;
a travel drive device that transmits a rotation of the engine to wheels through a torque converter and a transmission;
a water temperature detection device that detects a physical quantity correlated with a cooling water temperature of the engine;
a speed ratio detection device that detects a speed ratio of an input shaft and an output shaft of the torque converter; and
a speed limit device that limits a maximum rotation speed of the engine to a limit rotation speed which is lower than an upper limit value if the water temperature detection device detects an overheat state in which the cooling water temperature is equal to or higher than a predetermined value when the speed ratio detected by the speed ratio detection device is in a limit speed ratio region where a torque converter efficiency is equal to or less than a predetermined value.

2. An engine control device for work vehicle, comprising:
a rotation speed control device that controls a rotation speed of an engine according to an operation amount of an accelerator pedal;
a travel drive device that transmits a rotation of the engine to wheels through a torque converter and a transmission;
an oil temperature detection device that detects a physical quantity correlated with a hydraulic oil temperature of the torque converter;
a speed ratio detection device that detects a speed ratio of an input shaft and an output shaft of the torque converter; and
a speed limit device that limits a maximum rotation speed of the engine to a limit rotation speed which is lower than an upper limit value if the oil temperature detection device detects an overheat state in which the hydraulic oil temperature is equal to or higher than a predetermined value when the speed ratio detected by the speed ratio detection device is in a limit speed ratio region where a torque converter efficiency is equal to or less than a predetermined value.

3. An engine control device for work vehicle according to claim 1 or 2, wherein:
the torque converter has characteristics in that the torque converter efficiency increases with an increase in the speed ratio in a first region where the speed ratio is low and the torque converter efficiency decreases with an increase in the speed ratio in a second region where the speed ratio is high; and
the limit speed ratio region includes a region where the speed ratio is equal to or less than a first predetermined value in the first region and a region where the speed ratio is equal to or greater than a second predetermined value in the second region.

4. An engine control device for work vehicle according to claim 3, further comprising:
an automatic speed changer that shifts down a speed stage of the transmission when the detected speed ratio decreases to a shift-down speed ratio which is greater than the first predetermined value and shifts up the speed stage of the transmission when the detected speed ratio increases to a shift-up speed ratio which is less than the second predetermined value.
